# EUROPEAN PATENT APPLICATION

(11) **EP 4 679 665 A1**
(43) Date of publication of application: **14.01.2026**
(21) Application number: 24770478.6
(22) Date of filing: 22.02.2024
(51) Int. Cl.: H02J 7/00, B64C 27/08, B64D 27/24, H02J 7/02

(54) **CONTROL DEVICE, CONTROL METHOD, AND PROGRAM**

(30) Priority: 10.03.2023 JP 2023037980
(71) Applicant: DENSO CORPORATION, Kariya-city, Aichi 448-8661 (JP)
(72) Inventor: NAKAMURA, Masaya, Kariya-city, Aichi 448-8661 (JP); YOSHIDA, Shuhei, Kariya-city, Aichi 448-8661 (JP)
(74) Representative: TBK
(86) International application number: PCT/JP2024/006584
(87) International publication number: WO 2024/190365

(57) **Abstract**

A controller (50) controls power supplied from a battery (14) to an **EPU** (15) that drives a rotary wing (13) in an eVTOL. The controller includes an acquisition unit (51) that acquires battery information indicating states of battery packs (141) that are unit batteries included in the battery, and a control unit (52) that executes control based on the battery information. The control unit controls power distribution of the battery packs based on the battery information to reduce variation in state among the battery packs during at least a portion of an operation period excluding a predetermined period immediately following transition from takeoff operation to cruising operation.

## Description

### CROSS REFERENCE TO RELATED APPLICATION

The present application is based on and claims the benefit of priority from Japanese Patent Application No. 2023-037980 filed on March 10, 2023, the entire disclosure of the above application is incorporated herein by reference.

### TECHNICAL FIELD

The disclosure in this specification relates to a controller, a control method and a program.

### BACKGROUND

Patent Literature 1 discloses an electric aircraft. The disclosure of Patent Literature is incorporated herein by reference to explain technical elements described herein.

### PRIOR ART LITERATURE

### PATENT LITERATURE

Patent Literature 1: JP 6233671 B2

### SUMMARY OF INVENTION

In a configuration in which power is supplied from unit batteries that constitute a battery, variations in the battery state, such as SOC variations and temperature variations, occur among the unit batteries. In particular, the electric aircraft exemplified in Patent Literature 1 requires high output during takeoff and landing. This increases state variation among the unit batteries, and there is a risk that some of the unit batteries may become abnormal. In the above viewpoint and other viewpoints that are not mentioned, further improvements are awaited for a controller, a control method, and a program.

One disclosed object is to provide a controller, a control method, and a program that are capable of suppressing the occurrence of battery abnormalities.

A controller according to one aspect of the disclosure is a controller for controlling power supplied from a battery to an electric propulsion device configured to drive a rotary wing in an electric flight vehicle. The controller includes an acquisition unit and a control unit. The acquisition unit is configured to acquire battery information indicating states of unit batteries included in the battery. The control unit is configured to execute power distribution control to control power distribution of the unit batteries based on the battery information to reduce variation in state among the unit batteries during at least a portion of an operation period of the electric flight vehicle excluding a predetermined period immediately following transition from takeoff operation to cruising operation.

According to the controller according to the present disclosure, the state of the unit batteries is grasped and then the power distribution of the unit batteries is controlled. This makes it possible to suppress variations in the battery state. As a result, the occurrence of battery abnormalities can be suppressed. For example, battery abnormalities can be prevented before the occurrence. Thus, the safety of the flight can be enhanced.

In particular, the high output load during takeoff is likely to cause bias in ion concentration and temperature. Immediately after the transition from takeoff to cruising, the accuracy of monitoring the battery state temporarily decreases due to the influence of the bias described above. According to the controller of the present disclosure, the power distribution control is executed during at least a portion of the operation period excluding the predetermined period. This makes it possible to avoid errors in determination of the distribution control values and effectively suppress variation in the battery state.

A control method of another aspect of the disclosure is a method for controlling power supplied from a battery to an electric propulsion device configured to drive a rotary wing in an electric flight vehicle. The method includes acquiring battery information indicating states of unit batteries included in the battery. The method includes executing power distribution control to control power distribution of the unit batteries based on the battery information to reduce variation in state among the unit batteries during at least a portion of an operation period of the electric flight vehicle excluding a predetermined period immediately following transition from takeoff operation to cruising operation.

According to the control method according to the present disclosure, the state of the unit batteries is grasped and then the power distribution of the unit batteries is controlled. This makes it possible to suppress variations in the battery state. As a result, the occurrence of battery abnormalities can be suppressed. For example, battery abnormalities can be prevented before the occurrence. Thus, the safety of the flight can be enhanced.

In particular, the high output load during takeoff is likely to cause bias in ion concentration and temperature. Immediately after the transition from takeoff to cruising, the accuracy of monitoring the battery state temporarily decreases due to the influence of the bias described above. According to the control method of the present disclosure, the power distribution control is executed during at least a portion of the operation period excluding the predetermined period. This makes it possible to avoid errors in determination of the distribution control values and effectively suppress variation in the battery state.

A control program according to another aspect of the disclosure is a program for controlling power supplied from a battery to an electric propulsion device configured to drive a rotary wing in an electric flight vehicle. The program causes at least one processor to perform acquiring battery information indicating states of unit batteries included in the battery. The program causes at least one processor to perform executing power distribution control to control power distribution of the unit batteries based on the battery information to reduce variation in state among the unit batteries during at least a portion of an operation period of the electric flight vehicle excluding a predetermined period immediately following transition from takeoff operation to cruising operation.

According to the program according to the present disclosure, the state of the unit batteries is grasped and then the power distribution of the unit batteries is controlled. This makes it possible to suppress variations in the battery state. As a result, the occurrence of battery abnormalities can be suppressed. For example, battery abnormalities can be prevented before the occurrence. Thus, the safety of the flight can be enhanced.

In particular, the high output load during takeoff is likely to cause bias in ion concentration and temperature. Immediately after the transition from takeoff to cruising, the accuracy of monitoring the battery state temporarily decreases due to the influence of the bias described above. According to the program of the present disclosure, the power distribution control is executed during at least a portion of the operation period excluding the predetermined period. This makes it possible to avoid errors in determination of the distribution control values and effectively suppress variation in the battery state.

The multiple embodiments disclosed in this specification employ different technical means to achieve their respective objectives. Reference numerals in parentheses in the claims exemplify the correspondence with portions of embodiments described later, and are not intended to limit the technical scope. The objects, features, and advantages disclosed in this specification will become apparent by referring to following detailed descriptions and accompanying drawings.

### BRIEF DESCRIPTION OF DRAWINGS

FIG. 1 is a diagram a configuration of an eVTOL and a ground station.
FIG. 2 is a diagram illustrating an example of a redundant configuration of battery packs for an EPU.
FIG. 3 is a diagram illustrating an example of a redundant configuration of battery packs for an EPU.
FIG. 4 is a diagram illustrating a power profile of an eVTOL.
FIG. 5 is a diagram illustrating a functional layout of an operation management system.
FIG. 6 is a diagram illustrating a controller and a system including the controller.
FIG. 7 is a diagram illustrating an example of power distribution.
FIG. 8 is a diagram illustrating an example of power distribution.
FIG. 9 is a diagram illustrating an example of a regression model showing the relationship between ΔSOC and Δoutput.
FIG. 10 is a diagram illustrating an example of a regression model showing the relationship between ΔT and Δoutput.
FIG. 11 is a diagram illustrating an example of a map model showing the relationship between ΔSOC and Δoutput.
FIG. 12 is a diagram illustrating an example of a map model showing the relationship between ΔT and Δoutput.
FIG. 13 is a flowchart illustrating an example of a control method.
FIG. 14 is a flowchart illustrating an example of a control method.
FIG. 15 is a flowchart illustrating an example of a control method.
FIG. 16 is a diagram illustrating a controller and a system including the controller, according to a second embodiment.
FIG. 17 is a flowchart illustrating an example of a control method.
FIG. 18 is a flowchart illustrating an example of a control method executed by a controller according to a third embodiment.
FIG. 19 is a diagram illustrating an example of a controller and battery modules, according to a fourth embodiment.
FIG. 20 is a diagram illustrating an example of a controller and a battery modules.
FIG. 21 is a diagram illustrating a modification.

### EMBODIMENTS FOR CARRYING OUT INVENTION

Hereinafter, several embodiments will be described with reference to the drawings. The same or corresponding elements in the embodiments are assigned the same reference numerals, and redundant descriptions thereof may be omitted. When only a part of the configuration is described in one embodiment, the other parts of the configuration may employ descriptions about a corresponding configuration in another embodiment preceding the one embodiment. Further, not only the combinations of the configurations explicitly shown in the description of the respective embodiments, but also the configurations of multiple embodiments can be partially combined even when they are not explicitly shown as long as there is no difficulty in the combination in particular.

A controller, control method, and program described below are applied to an electric flight vehicle. The description of A and/or B means at least one of A and B. That is, the A and/or B can include only A, only B, and both A and B.

### First Embodiment

An electric flight vehicle includes a motor (rotating electrical machine) as a drive source for movement. The electric flight vehicle may be referred to as an electric airplane, an electric aircraft, or the like. The electric flight vehicle can move vertically and horizontally. The electric flight vehicle is capable of moving in a direction that has both vertical and horizontal components, in other words, in an oblique direction. The electric flight vehicle includes, for example, electric vertical takeoff and landing aircraft (eVTOL), electric short takeoff and landing aircraft (eSTOL), drones, etc. eVTOL is an abbreviation for electric Vertical Take-Off and Landing aircraft. eSTOL is an abbreviation for electronic Short distance Take-Off and Landing aircraft.

The electric flight vehicle may be either a manned vehicle or an unmanned vehicle. In the case of a manned aircraft, the electric flight vehicle is operated by a pilot as an operator. In the case of an unmanned vehicle, the electric flight vehicle can be controlled remotely by an operator or automatically by a control system. As an example, the electric flight vehicle in this embodiment is an eVTOL.

### (eVTOL)

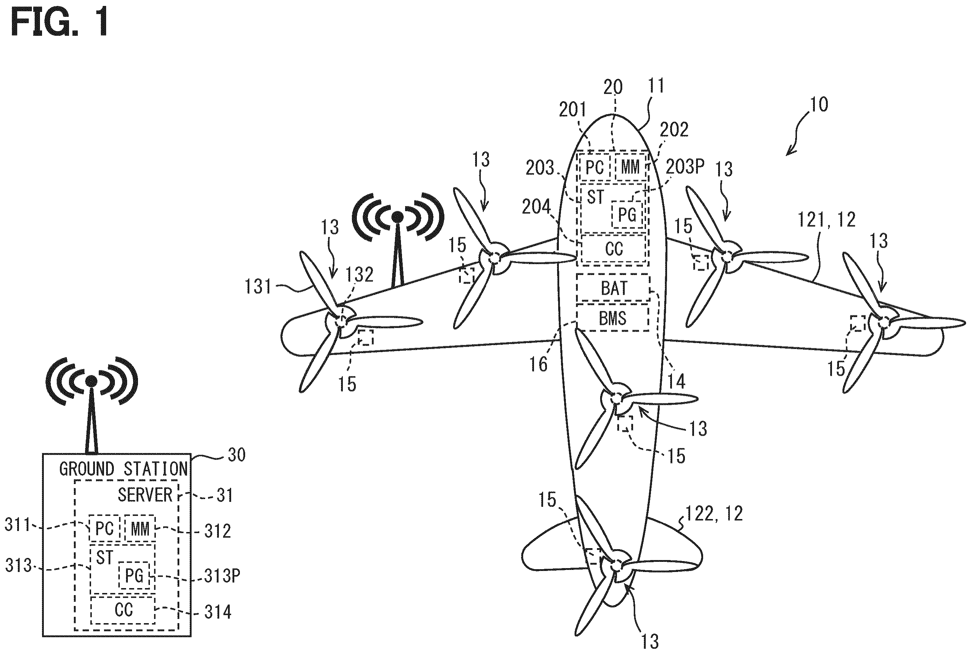

FIG. 1 shows the eVTOL and a ground station. As shown in FIG. 1, the eVTOL 10 includes an aircraft body 11, fixed wings 12, rotary wings 13, a battery 14, EPUs 15 and BMS 16.

The aircraft body 11 is the fuselage of the aircraft. The aircraft body 11 has a shape that extends in the front-rear direction. The aircraft body 11 defines a cabin for an occupant and/or a cargo hold for carrying luggage.

The fixed wings 12 are wings of the aircraft and connected to the aircraft body 11. The fixed wings 12 provide gliding lift. The gliding lift is the lift generated by the fixed wings 12. For example, the fixed wings 12 include a main wing 121 and a tail wing 122. The main wing 121 extends to the left and right from near the center of the aircraft body 11 along the front-rear direction. The tail wing 122 extends to the left and right from the rear of the aircraft body 11. The shape of the fixed wings is not particularly limited. For example, swept-back wings, delta wings, straight wings may be used.

The rotary wings 13 are provided on the aircraft. At least one of the rotary wings 13 may be provided on the fixed wings 12. At least one of the rotary wings 13 may be provided on the aircraft body 11. The number of the rotary wings 13 provided on the eVTOL 10 is not particularly limited. As an example, multiple rotary wings 13 are provided on both the aircraft body 11 and the main wing 121. The eVTOL 10 has six rotary wings 13.

The rotary wings 13 may be referred to as a rotor, propeller, or fan. The rotary wings 13 each have blades 131 and a shaft 132. The blades 131 are attached to the shaft 132. The blades 131 are vanes that rotate together with the shaft 132. Multiple blades 131 extend radially around the axis of the shaft 132. The shaft 132 is a rotation axis of a rotary wing 13 and is rotated by a motor of an EPU 15.

The rotary wings 13 generate thrust through rotation. The thrust primarily acts as rotational lift on the eVTOL 10 during takeoff and landing operations. The rotary wings 13 primarily provide rotational lift during takeoff and landing operations. The rotational lift is the lift generated by the rotation of the rotary wings 13. During takeoff and landing operations, the rotary wings 13 may provide only rotational lift, or may provide both rotational lift and forward thrust. The rotary wings 13 provide rotational lift during the hovering of the eVTOL 10.

The thrust primarily acts as propulsive force on the eVTOL 10 during cruising operations. The rotary wings 13 primarily provide thrust during cruising operations. During cruising operations, the rotary wings 13 may provide only thrust or may provide both lift and thrust.

The battery (BAT) 14 is a device for driving the rotary wings 13. The battery 14 is capable of storing direct current power and includes chargeable battery cells. The battery cell is a secondary battery that generates electromotive force through chemical reactions. The battery cell is, for example, a lithium ion secondary battery, a nickel-metal hydride secondary battery, or the like. The battery cell may be a secondary battery in which an electrolyte is a liquid, or may be what is called an all-solid-state battery in which an electrolyte is a solid. The battery cell may have any configuration as long as the battery reaction occurs by ions (electrolyte) contributing to the battery reaction moving between positive and negative electrodes via an electrolytic solution and/or a solid electrolyte. The eVTOL 10 may include a fuel cell and a generator in addition to the battery 14 as a power source that supplies power to the equipment. The battery 14 supplies electric power to the EPUs 15.

The battery 14 of the eVTOL 10 is required to have high capacity and high output performance. For this reason, battery cells that can obtain high capacity and high output are desirable. In terms of output, battery cells having low resistance in a wide SOC region are desirable. In particular, battery cells having low resistance and high output even in a low SOC region are desirable. SOC is an abbreviation for State Of Charge.

A positive electrode material for the battery cells may be, for example, LCO, NMC, NCA, LFP, or LMFP. LCO is lithium cobalt oxide (LiCoO₂). NMC is a lithium nickel cobalt manganese oxide (Li(NiMnCo)O₂). NCA is lithium nickel cobalt aluminate (Li(NiCoAl)O₂). LFP is lithium iron phosphate (LiFePO₄). LMFP is lithium manganese iron phosphate (LiFeₓMn_{y}PO₄). In particular, a positive electrode of LMFP or a cathode obtained by blending LMFP and NMC, which have low resistance in the low SOC region is preferable.

A negative electrode material for the battery cells may be, for example, a carbon-based material such as hard carbon or soft carbon, a silicon-based material, a lithium-based material, or a titanium-based material such as LTO or NTO. LTO is lithium titanate (Li₄Ti₅O₁₂). NTO is niobium titanium oxide (TiNb₂O₇). In particular, a negative electrode of a carbon-based material or a negative electrode of a titanium-based material, which has low resistance in the low SOC region, is preferable.

The EPUs 15 rotate and drive the rotary wings 13 that provide thrust to the eVTOL 10. The EPUs 15 are equipment for rotationally driving the rotary wings 13. EPU is an abbreviation for Electric Propulsion Unit. Each EPU 15 corresponds to an electric propulsion device. Each EPU 15 is equipped with a motor. Each EPU 15 includes an inverter and an ESC in addition to the motor. ESC is an abbreviation for Electronic Speed Controller. As an example, the number of the EPUs 15 is the same as the number of the rotary wings 13. In other words, the eVTOL 10 has six EPUs 15. The EPUs 15 and the rotary wings 13 are connected in a one-to-one relationship. Alternatively, two or more rotary wings 13 may be connected to a single EPU 15 via a gear box.

The BMS 16 monitors the state of the unit batteries that constitute the battery 14. BMS is an abbreviation for Battery Management System. The BMS 16 is capable of monitoring the voltage, current, temperature, internal resistance, SOC, SOH, and other safety-related states of the battery 14, such as the internal pressure and gas leakage. SOH is an abbreviation for State Of Health. For example, one BMS 16 is provided for one unit battery. The BMS 16 monitors the state of each of the unit batteries.

The eVTOL 10 further includes an ECU 20 and an auxiliary machine (not shown). ECU is an abbreviation for Electronic Control Unit. The eVTOL 10 may include a lift adjustment mechanism (not shown). The lift adjustment mechanism adjusts the gliding lift of the fixed wings 12. The lift adjustment mechanism increases or decreases the gliding lift generated by the fixed wings 12. The eVTOL 10 may be equipped with, for example, a tilt mechanism or flaps as the lift adjustment mechanism. The tilt mechanism is driven to adjust the tilt angle of the rotary wings 13. The flaps are movable wing pieces and provided on the fixed wings 12.

### (Unit Battery)

The battery 14 is configured to include multiple unit batteries, which are battery elements of a predetermined unit. The battery 14 may include multiple battery packs as the multiple unit batteries. The number and arrangement of the battery packs are not particularly limited. When the battery packs are used as the unit batteries, each battery pack may include at least one battery module. A battery module is a modularization of multiple battery cells. The battery module has multiple battery cells connected in series or multiple battery cells connected in parallel and in series.

The battery packs may be provided individually for the multiple EPUs 15. A single EPU 15 may be configured to receive power from multiple battery packs. A single battery pack may be configured to supply power to multiple EPUs 15.

As an example, the battery 14 of this embodiment includes multiple battery packs. The battery packs are provided redundantly for the EPUs 15. That is, the electric power can be supplied from multiple battery packs to one EPU 15. A configuration may be adopted in which power can be supplied from multiple battery packs to one EPU 15, and power can be supplied from one battery pack to multiple EPUs 15.

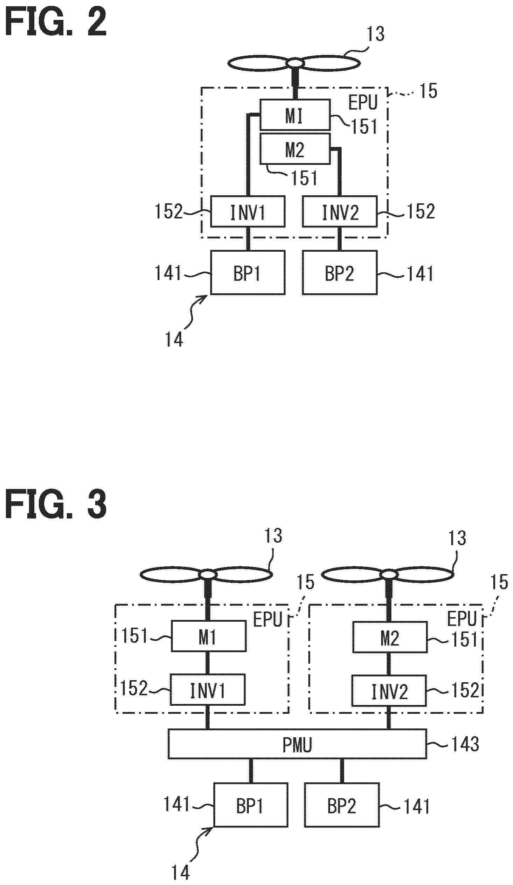

As a redundant configuration, as shown in FIG. 2, battery packs 141 may be individually connected to multiple motors 151 constituting an EPU 15. In FIG. 2, the battery 14 (battery packs 141) and the EPU 15 are shown for one rotary wing 13. In the example shown in FIG. 2, the EPU 15 includes two motors 151 that drive a common (single) rotary wing 13, and two inverters 152. The battery 14 includes two battery packs 141. A motor (M1) 151 is connected to a battery pack (BP1) 141 via an inverter (INV1) 152. A motor (M2) 151 is connected to a battery pack (BP2) 141 via an inverter (INV2) 152.

Thus, one rotary wing 13 includes a first system and a second system. The first system includes the motor (M1) 151, the inverter (INV1) 152, and the battery pack (BP1) 141. The second system includes the motor (M2) 151, the inverter (INV2) 152, and the battery pack (BP2) 141. The number of motors 151 that drive the common rotary wing 13 is not limited to the example described above. For example, three or more motors 151 may be provided.

As a redundant configuration, the battery packs 141 may be connected in parallel as shown in FIG. 3. For convenience, two EPUs 15 and two battery packs 141 are shown in FIG. 3. The two EPUs 15 drive different rotary wings 13. Each EPU 15 includes one motor 151 and one inverter 152. Each inverter 152 is connected to the PMU 143. The two battery packs 141 are also connected to the PMU 143. PMU is an abbreviation for Power Management Unit. The PMU 143 may be referred to as a power distribution unit. The two battery packs (BP1, BP2) 141 are capable of supplying power to the motor (M1) 151 via the PMU 143 and the inverter (INV1) 152. The two battery packs (BP1, BP2) 141 are capable of supplying power to the motor (M2) 151 via the PMU 143 and the inverter (INV2) 152. Each of the battery packs 141 is capable of supplying power to the two EPUs 15.

The PMU 143 has a function of distributing power supplied from battery packs 141 to multiple EPUs 15. The PMU 143 may charge and discharge the multiple battery packs 141 in accordance with instructions from a controller described below. The PMU 143 may perform charging and discharging so as to achieve a predetermined power distribution. The PMU 143 may have an electrical cutoff function for the multiple battery packs 141. The number of EPUs 15 connected to the PMU 143 is not limited to the above example. Three or more EPUs 15 may be connected. The number of battery packs 141 connected to the PMU 143 is not limited to the above example. Three or more battery packs 141 may be connected.

### (Power Profile)

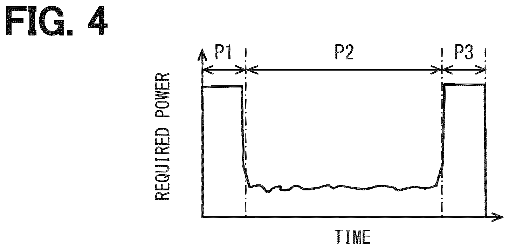

FIG. 4 shows a power profile from take-off to landing of the eVTOL 10. The power profile of electric flight vehicles other than eVTOL is similar to that of the eVTOL 10. The period P1 is referred to as takeoff operation, takeoff time, takeoff period, etc. The period P2 is referred to as cruising operation, cruising time, cruising period, etc. The period P3 is referred to as landing operation, landing time, landing period, etc. The periods P1 and P3 are referred to as takeoff and landing operation time, takeoff and landing time, takeoff and landing period, etc. For convenience, in FIG. 1, the required power, that is, the output, is kept constant over almost the entire periods P1 and P3, respectively.

The eVTOL 10 ascends from a take-off point to a cruising start point in the period P1. The eVTOL 10 cruises at a predetermined altitude in the period P2. The eVTOL 10 descends from an end point of the period P2 to a landing point in the period P3. A movement of the eVTOL 10 mainly includes a horizontal direction component in the period P2 and mainly includes a vertical direction component in each of the periods P1 and P3. During the periods P1 and P3 when moving in the vertical direction, the operation of the rotary wings 13 requires high output continuously for a predetermined time.

### (Variations in Battery State)

In the case of the redundant configuration shown in FIG. 2, for example, in normal operation, approximately equal amounts of power are supplied from each battery pack 141 to the corresponding motor 151. If an abnormality occurs in the motor 151 or the battery pack 141, the abnormal system among the multiple systems is electrically disconnected, and the driving of the rotary wing 13 continues with the remaining normal systems.

In this manner, in a configuration in which power is supplied from multiple battery packs 141 (unit batteries), variations in battery state, such as variations in SOC and battery temperature, may occur among the battery packs 141. Such variations may occur due to differences in resistance between the battery packs 141 caused by, for example, initial individual differences, differences in the degree of deterioration, and differences in environmental temperature. It may occur due to differences in environmental temperature or differences in the heat dissipation performance of the battery. Even in a configuration in which power is supplied to a common EPU 15, variations in the battery state become apparent due to a separated arrangement that takes redundancy into consideration.

In particular, in the eVTOL 10, the variation in battery state is likely to increase among the multiple battery packs 141 (unit batteries). As described above, high power output is required during takeoff. This increases SOC variations and temperature variations, for example, between battery packs 141 that drive a common EPU 15. During cruising, each EPU 15 is driven in a different way. This increases SOC variation and temperature variation between the battery packs 141 corresponding to the respective EPUs 15. Unlike takeoff and landing operations, only a portion of the power is used during cruising operations, and therefore variations are likely to occur between the battery packs 141 corresponding to each EPU 15. Furthermore, high power output is required during landing operations. Since a landing operation is performed in a state where variations have occurred during takeoff and cruising operations, SOC variations and temperature variations increase.

When the SOC variation increases, the output of some of the battery packs 141 drops significantly. If the temperature variation increases, some of the battery packs 141 will experience an abnormal overheating. Therefore, there is a risk that this will result in an abnormality in the redundant system rather than an actual battery abnormality such as thermal runaway. Even if no abnormality occurs during a single flight, the risk of an abnormality occurring increases with repeated takeoffs and landings. Even in the configuration shown in FIG. 3, SOC variations and temperature variations among the battery packs 141 become an issue.

As described above, in an electric flight vehicle such as the eVTOL 10, variation in battery state among multiple unit batteries, in other words, state variation, become an issue.

### (Operation Management System)

The operation management system is a system for creating an operation plan, monitoring an operation status, collecting and managing information related to an operation, supporting the operation, and the like. At least a part of functions of the operation management system may be arranged in an internal computer of the eVTOL 10. At least a part of the functions of the operation management system may be arranged in an external computer that can wirelessly communicate with the eVTOL 10. An example of the external computer is a server 31 of a ground station 30 illustrated in FIG. 1. The ground station 30 can wirelessly communicate with the eVTOL 10. The ground station 30 can wirelessly communicate with other ground stations.

As an example, in the present embodiment, a part of the functions of the operation management system is arranged in the ECU 20 of the eVTOL 10, and a part of the functions of the operation management system is provided in the server 31 of the ground station 30. The functions of the operation management system are shared between the ECU 20 and the server 31.

As shown in FIG. 1, the ECU 20 includes a processor (PC) 201, a memory (MM) 202, a storage (ST) 203, and a communication circuit (CC) 204 for wireless communication. The processor 201 executes various processes by accessing the memory 202. The memory 202 is a rewritable volatile storage medium. The memory 202 is, for example, a RAM. RAM is an abbreviation for Random Access Memory. The storage 203 is a rewritable nonvolatile storage medium. The storage 203 stores a program (PG) 203P to be executed by the processor 201. The program 203P constructs multiple functional units by causing the processor 201 to execute multiple instructions. The ECU 20 may include multiple processors 201.

Similar to the ECU 20, the server 31 includes a processor (PC) 311, a memory (MM) 312, a storage (ST) 313, and a communication circuit (CC) 314. The processor 311 executes various processes by accessing the memory 312. The memory 312 is a rewritable volatile storage medium, for example, a RAM. The storage 313 is a rewritable nonvolatile storage medium. The storage 313 stores a program (PG) 313P to be executed by the processor 311. The program 313P constructs multiple functional units by causing the processor 311 to execute multiple instructions. The server 31 may include multiple processors 311.

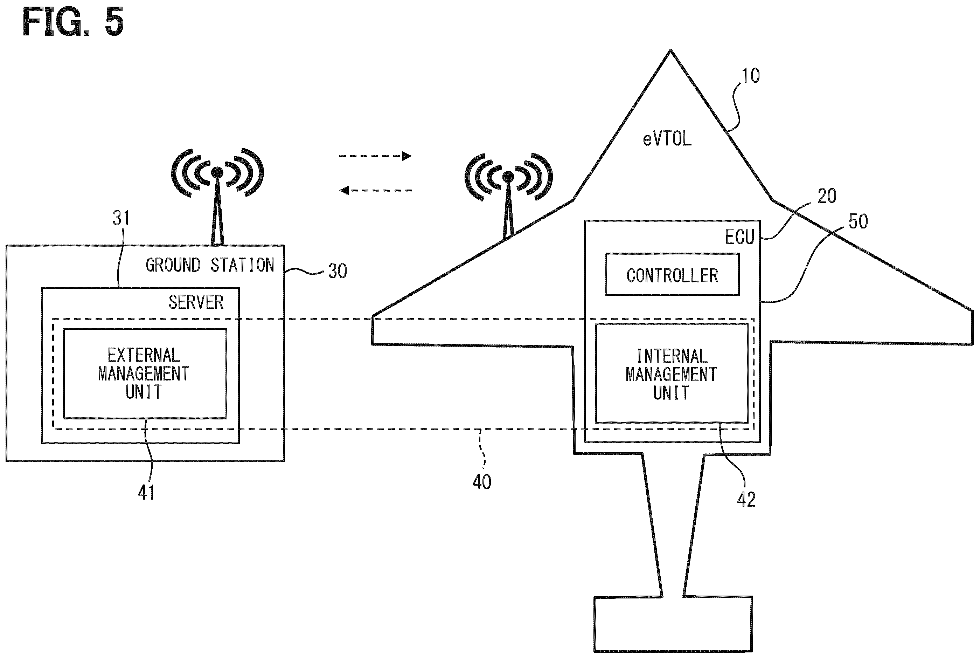

FIG. 5 illustrates an example of a functional arrangement of the operation management system. As illustrated in FIG. 5, as an example, an operation management system 40 of the present embodiment includes an external management unit 41 and an internal management unit 42. The external management unit 41 is functionally disposed in the server 31 of the ground station 30. The internal management unit 42 is functionally disposed in the ECU 20 of the eVTOL 10. In this way, a part of the functions of the operation management system 40 is provided in the server 31, and the other part of the functions are arranged in the ECU 20. The external management unit 41 and the internal management unit 42 are capable of wirelessly communicating with each other. The internal management unit 42 is capable of communicating with various devices arranged in the eVTOL 10 in a wired or wireless manner.

### (Controller)

A controller 50 shown in FIG. 5 acquires battery information indicating the state of the multiple unit batteries included in the battery 14, and controls power distribution of the multiple unit batteries based on the acquired battery information. As an example, the controller 50 of the present embodiment acquires battery information of the multiple battery packs 141 and controls the power distribution of the multiple battery packs 141.

At least a portion of the controller 50 may be functionally disposed in the ECU 20 of the eVTOL 10 or may be functionally disposed in the server 31 of the ground station 30. At least a portion of the controller 50 may be located as a part of the external management unit 41, or may be located as a part of the internal management unit 42. At least a portion of the controller 50 may be located in the EPUs 15. At least a portion of the controller 50 may be located in the BMS 16. From the standpoint of controllability, it is preferable that at least a portion of the controller 50 be located inside the eVTOL 10. As an example, the controller 50 of the present embodiment is functionally disposed in the ECU 20 of the eVTOL 10, as shown in FIG. 5.

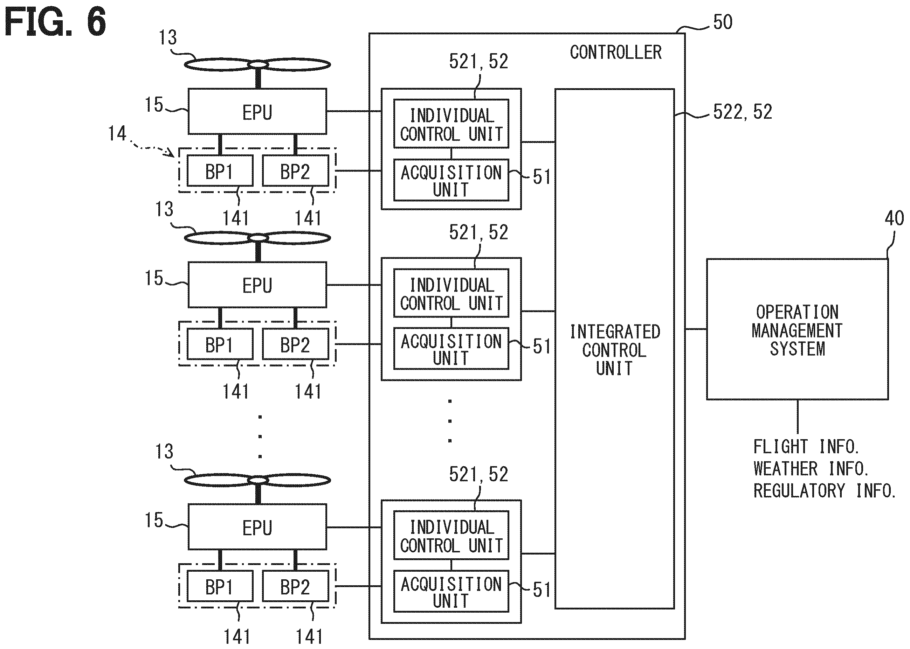

FIG. 6 illustrates a schematic configuration of the controller 50. FIG. 6 shows a system including the controller 50. FIG. 6 illustrates a simplified example of the redundant configuration shown in FIG. 2, including the battery 14 and the EPUs 15. FIG. 6 shows the battery 14, the EPUs 15, and the operation management system, together with the controller 50. The controller 50 may form a battery system together with the battery 14. The controller 50 may form a drive system together with the EPUs 15. The controller 50 may form a system together with the battery 14 and the EPUs 15. The controller 50 may form a system together with the operation management system 40.

As shown in FIG. 6, the controller 50 includes acquisition units 51 and control units 52. The acquisition units 51 acquire battery information on the multiple unit batteries, respectively. As described above, the battery information is information that indicates the battery state of the unit batteries. The battery state is the SOC and/or the battery temperature. As an example, the acquisition units 51 in this embodiment acquire the battery information about the battery packs 141, which are unit batteries, respectively. The acquisition units 51 may acquire the SOC as the battery information, or may acquire the battery temperature as the battery information. Both the SOC and the battery temperature may be acquired.

The acquisition units 51 may be provided individually for the EPUs 15, or a common acquisition unit 51 may be provided for multiple EPUs 15. Alternatively, the acquisition units 51 may be provided individually for the battery packs 141. As an example, the acquisition units 51 in this embodiment are provided individually for the EPUs 15. Each acquisition unit 51 acquires battery information of each of the multiple battery packs 141 that supply power to the corresponding EPU 15.

The acquisition unit 51 may acquire a calculated value from the BMS 16 as the battery information. The acquisition unit 51 may acquire raw data relating to the unit batteries from the BMS 16 or the like, and perform calculations to acquire battery information. The controller 50 may be provided with a calculation function separate from the acquisition unit 51, and the acquisition unit 51 may acquire the battery information that is the result of the calculation. The battery information may be actual measured values such as the battery temperature, or estimated or predicted values. The estimated values and predicted values may be calculated using battery data and operation plan data using a map model or a regression model, for example. The battery data may be actual measured values, calculated values, and/or historical data of past flights. The operational plan date may be output profiles. The estimated or predicted values may be calculated based on a regression model using the historical data of past flights. The estimated values are current values, while the predicted values are future estimated values.

The SOC may be estimated using actual measured values such as the open circuit voltage (OCV), current during operation, voltage, and battery temperature, and by employing battery models such as a map model, a battery equivalent circuit model, or a battery reaction model. OCV is an abbreviation for Open Circuit Voltage. The battery temperature may be calculated by estimating from actually measured temperature data of some of the battery cells, or may be estimated from output data using a map model, a regression model, a battery model and/or a thermal analysis model. The calculation of the estimated values or predicted values may use at least one of information other than that of the battery, such as flight information, weather information, and regulatory information from the operation management system 40. The flight information may include, for example, a flight altitude, a flight speed, an attitude (angle), and a flight position of the current flight. The flight information may include information on the current flight as well as information such as flight altitude and flight speed based on the flight plan. The weather information may include, for example, wind direction, wind speed, and atmospheric pressure. The regulatory information may include, for example, the presence or absence of noise regulations and rules regarding flight altitude.

The control unit 52 controls (adjusts) the power distribution of the multiple unit batteries based on the battery information acquired by the acquisition unit 51. The control unit 52 controls power distribution based on the battery information so as to suppress the state variation among the unit batteries. The control unit 52 controls the power distribution during at least a part of the operation period excluding a predetermined period immediately after the transition from takeoff operation to cruising operation. The control unit 52 does not execute power distribution control for a predetermined period immediately after the transition to cruising operation.

As an example, the control unit 52 in this embodiment controls power distribution based on battery information during at least a part of the operation period excluding the above-mentioned predetermined period so as to suppress the state variation among the multiple battery packs 141. The operation period is the period during which the battery 14 operates. The operation period includes the above-mentioned periods P1, P2, and P3. The operation period may include, for example, a charging period for the battery 14.

When a secondary battery outputs power, in other words, discharges, a temporary imbalance occurs in the concentration distribution of ions that contribute to the battery reaction. The concentration imbalance occurs in the electrolytic solution or the electrode. When the concentration imbalance occurs, the internal resistance of the battery temporarily (reversibly) rises. Therefore, even when the SOC of is sufficient, the output performance of the battery decreases. In this manner, temporary (reversible) deterioration occurs in the battery. The temporary deterioration may be referred to as high-rate deterioration. The greater the concentration imbalance is, the more the degree of temporary deterioration increases. In particular, the degree of temporary degradation increases with increasing power output. Furthermore, high output increases temperature unevenness (bias) inside the battery module.

Such a high output load during takeoff operation is likely to cause imbalances in the ion concentration and temperature inside the battery module. Immediately after the transition from takeoff operation to cruising operation, the accuracy of monitoring the battery state decreases due to the influence of the bias described above. Therefore, if this power distribution control is performed during this period, there is a risk that the accuracy of power distribution will deteriorate. By imposing a restriction that prevents the execution of power distribution control for the predetermined period, it is possible to avoid errors in determination of distribution control values and effectively suppress variation in the battery state.

The predetermined period may be set based on the rate of change of the state of the unit batteries. This makes it possible to execute power distribution control while avoiding periods with large fluctuation rates. As described above, if there is an imbalance in the ion concentration, the internal resistance of the battery increases. Therefore, the rate of change of resistance or voltage may be used. Also, the rate of change of the battery temperature may be used. The period until the fluctuation rate becomes lower than or equal to a predetermined rate can be set as the predetermined period. In this case, the predetermined period may be determined by real-time monitoring. The predetermined period may be set in advance through prior experiments or the like.

The control unit 52 may control the power distribution in a manner that reduces the variation in battery states among all the battery packs 141 that influence each other. The control unit 52 may control the power distribution of each battery pack 141 under the constraints of the output requirements of each EPU 15. The control unit 52 may control the output distribution of the multiple EPUs 15 so as to suppress the state variation among the battery packs 141 corresponding to each of the multiple EPUs 15.

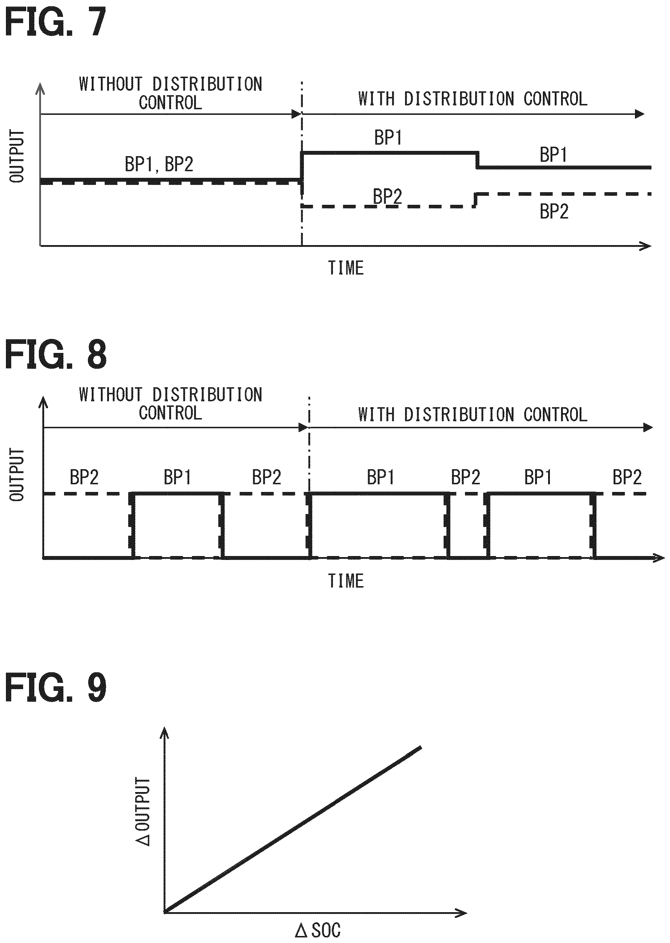

As the power distribution control, the control unit 52 may control (adjust) the distribution of the output values of the battery packs (BP1, BP2) 141 as shown in FIG. 7. The control unit 52 is capable of controlling the distribution of the output values using, for example, an inverter 152, a DCDC converter, a resistor, and the like. The control unit 52 determines the distribution of output values based on the battery information, and controls, for example, via the inverter 152, so that the battery packs 141 output at the determined output values. Without the distribution control, equal control may be performed so that the output values are approximately equal to each other, as shown in FIG. 7.

As the power distribution control, the control unit 52 may control the distribution of output time of each battery pack (BP1, BP2) 141, for example, as shown in FIG. 8. The control unit 52 controls the power distribution according to the output time while keeping the output value constant. The control unit 52 may use an inverter or a DCDC converter, or may use a mechanical relay or a semiconductor switch when performing the output time distribution control. Without the distribution control, as shown in FIG. 8, equal control may be performed so that the output times are approximately the same, specifically, so that the same output values are output alternately for the same amount of time. The control unit 52 may execute a combination of the output value distribution control illustrated in FIG. 7 and the output time distribution control illustrated in FIG. 8.

The control unit 52 may determine the power distribution using a regression model or a map model. The regression model and the map model are obtained by modeling or mapping the relationship between the SOC variation or the battery temperature variation and the power distribution, and can be generated using prior experimental data or simulations. Machine learning may be used to generate the regression model.

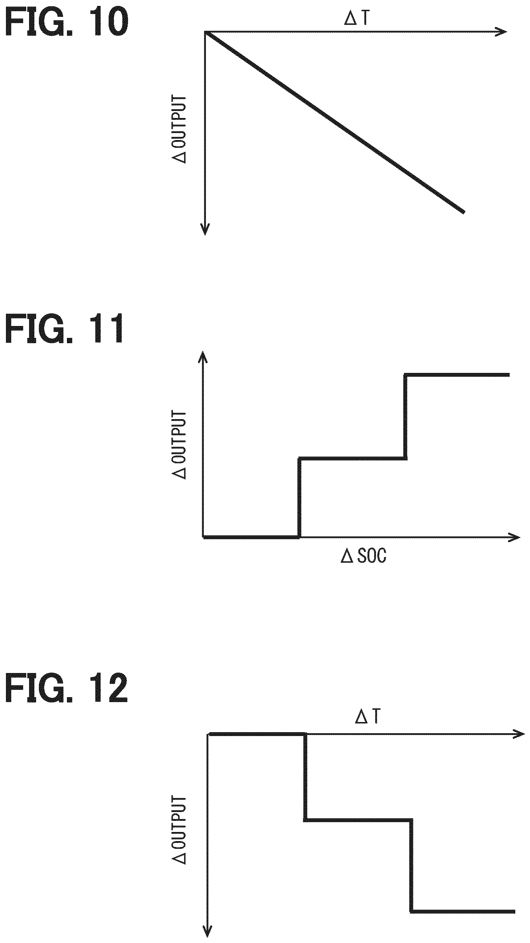

FIG. 9 shows an example of a regression model showing the relationship between the SOC variation (ΔSOC) and the amount of change (Δoutput) in the output of a battery pack 141. According to this regression model, it is possible to increase the output of the battery pack 141 having a large SOC. FIG. 10 shows an example of a regression model showing the relationship between the variation in battery temperature (ΔT) and the amount of change (Δoutput) in the output of the battery pack 141. According to this regression model, the output of the high temperature battery pack 141 can be reduced. Although a linear regression model is shown as the regression model in FIG. 9 and FIG. 10, the regression model is not limited to these. A non-linear regression model may also be used.

FIG. 11 shows an example of a map model showing the relationship between the SOC variation (ΔSOC) and the amount of change (Δoutput) of the output of the battery pack 141. FIG. 12 shows an example of a map model showing the relationship between the variation in battery temperature (ΔT) and the amount of change (Δoutput) in the output of the battery pack 141.

FIGS. 9 to 12, the vertical axis represents the amount of change in output (Δoutput), but instead, it may represent the amount of change in output time (Δoutput time). The regression model or map model may be generated based on only the SOC variation or only the temperature variation as shown in FIGS. 9 to 12. A regression model or a map model may be generated using the SOC variation and the temperature variation as variables.

The control unit 52 may be configured to execute power distribution control when the state variation, which is variation in the battery states among the unit batteries, exceeds a predetermined degree. An index of the state variation may be, for example, the difference between the maximum value and the minimum value or the variance. The predetermined degree may be determined taking into consideration the precision of power distribution to the device and the allowable level of variation, for example. The allowable level refers to, for example, a margin relative to a set threshold that would indicate an abnormality condition. This makes it possible to effectively suppress the variation.

The control unit 52 may switch the power distribution control depending on a navigation mode of the eVTOL 10. As described above, the power profile of the eVTOL 10 (electric flight vehicle) differs significantly between cruising operation and takeoff and landing operation. Therefore, by executing optimal power distribution control according to the navigation mode, for example by setting the power distribution conditions and the timing of control execution, it is possible to effectively suppress the state variation.

In addition, the likelihood of state variation occurring varies for each flight mode depending on various conditions such as the configuration and arrangement of the EPUs 15 or the battery 14, the flight range, the flight altitude, and the environmental conditions. Depending on the likelihood of state variation occurring for each navigation mode, the control unit 52 may perform power distribution control only during takeoff operation, only during cruising operation, or only during landing operation, and may restrict power distribution control in other navigation modes. The control unit 52 may perform power distribution control only during specific periods during takeoff, cruising, and landing operations, depending on the likelihood of the state variation for each navigation mode, and may limit power distribution control during periods other than the specific periods.

The control unit 52 may execute power distribution control during cruising operation except for the predetermined period. As described above, during cruising operation, a high output load is not required as during takeoff and landing operation, and it is necessary to exert only a portion of the output performance. Since each EPU 15 may be made to perform different operations, such as dividing up functions or stopping operations, the state variation can be effectively suppressed by controlling the operation of each EPU 15 at optimal timing and intervals according to the operation of each EPU 15.

For example, by obtaining the degree of state variation for each operation of the EPUs 15 in advance through experiments or the like, it is possible to execute power distribution control at predetermined timing and intervals. Timing and intervals may be determined based on past flight performance. Timing and intervals may be determined by real-time monitoring.

During cruising operation, the control unit 52 may use battery data, such as actual measured values, calculated values, and historical data, as well as data such as an output profile based on an operation plan, and may use estimated or predicted values calculated by a regression model, etc., as battery information. When making an estimation or prediction, information other than that of the battery may be acquired and used from the operation management system 40, such as at least one of flight information, weather information, and regulatory information.

As described above, the state variation is likely to occur between the EPUs 15 during cruising operations, which may result in insufficient performance to handle the high power load during landing operations. Therefore, during cruising operations, the control unit 52 may control the power distribution of the unit batteries (battery packs 141) corresponding to each of the multiple EPUs 15. In other words, control unit 52 may control the output distribution of the multiple EPUs 15 so as to suppress the state variation between the unit batteries corresponding to each of the multiple EPUs 15. The control unit 52 may adjust the distribution of lift and thrust required for cruising, that is, the total amount of power required by each EPU 15, among the multiple EPUs 15.

The control unit 52 controls the output distribution so that the power loads of all the EPUs 15 are approximately uniform, while performing correction using, for example, individual resistance differences among the unit batteries and environmental temperature differences. When controlling the output distribution of the EPUs 15, the control unit 52 may execute power distribution control for multiple unit batteries corresponding to one EPU 15, or may distribute power evenly.

As described above, the power load during takeoff and landing operations is higher than during cruising operations. This may result in a sudden increase in state variation. Therefore, instead of monitoring in real time and performing feedback control, the control unit 52 may pre-determine the power distribution before takeoff and landing operations, and control with the pre-determined distribution from the start of takeoff and landing. The control unit 52 may use battery data, such as actual measured values, calculated values, and historical data, as well as data such as an output profile based on an operation plan, and may use estimated or predicted values calculated by a regression model, etc., as battery information. The control unit 52 may predict battery information and the state variation at the time when takeoff and landing operations are completed, and determine power distribution based on this prediction. In the case of SOC, the battery information used for the prediction is, for example, the SOC before takeoff and landing and information on variation in battery resistance. In the case of battery temperature, for example, the battery information used for the prediction is, for example, information on variation in battery temperature, battery heat capacity, and heat dissipation performance before takeoff and landing.

In addition, for supply power to onboard computers (e.g., ECU 20) and auxiliary equipment (not shown), such as an air conditioner, a battery pack different from the battery pack 141 (battery 14) that supplies power to the EPUs 15 may be used, or at least a part of battery pack 141 may be used. A part of a battery module may be used. To ensure redundancy, at least a portion of the battery 14 may be combined with another battery. When power is supplied to auxiliary devices from at least a portion of the battery 14, it is advisable to execute power distribution control taking into consideration the power supply to the auxiliary devices in addition to the EPUs 15. When the power supply to the auxiliary devices is small compared to the power supply to the EPUs 15, the auxiliary devices do not need to be taken into consideration in the power distribution control.

As an example, the control unit 52 in this embodiment includes an individual control unit 521 and an integrated control unit 522. Like the acquisition unit 51, the individual control unit 521 is provided for each EPU 15. The individual control unit 521 controls the distribution of power among multiple battery packs 141 that supply power to a common EPU 15. The integrated control unit 522 controls the power distribution between the EPUs 15. In other words, the integrated control unit 522 controls the power distribution among the battery packs 141 corresponding to the multiple EPUs 15. The integrated control unit 522 may control the output distribution of the EPUs 15.

### (Control Method)

Execution of processing of each functional block of the controller 50 by the processor 201 corresponds to execution of a control method. As described above, the controller 50 executes power distribution control according to the navigation mode.

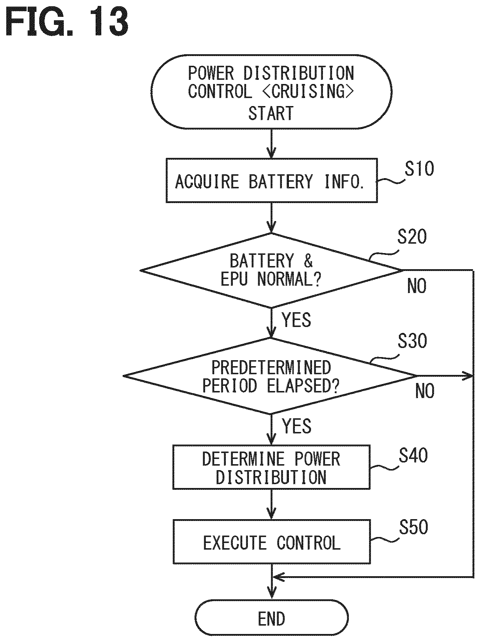

FIG. 13 shows an example of a power distribution control process executed by the controller 50, that is, a control method for power distribution.

First, the controller 50 acquires battery information (step S10). As described above, a calculated value may be acquired as the battery information, or raw data may be acquired and then calculated to acquire the battery information. The battery information may be an actual measured value, a predicted value, or an estimated value. For example, it may be an estimated value or a predicted value calculated by a map model or a regression model using the battery information such as actual measured values and historical data and data such as an output profile during cruising operation. As an example, the controller 50 of the present embodiment acquires the SOC and the battery temperature as the battery information. In addition to the battery information, the controller 50 may also acquire at least one of other information regarding the battery 14, flight information, weather information, and regulatory information. The battery information (battery state) may be corrected using the other acquired information, and whether to execute power distribution control may be determined based on the other information.

Next, the controller 50 determines whether the battery 14 and the EPUs 15 are normal (step S20). When no abnormality has occurred in the battery 14 and the EPUs 15, the controller 50 determines that they are normal, and proceeds to step S30. When an abnormality occurs in at least one of the battery 14 and the EPUs 15, the controller 50 determines that it is not normal, and ends the series of processes.

When the battery 14 and the EPUs 15 are normal, the controller 50 then determines whether the predetermined period of time has elapsed (step S30). As described above, the predetermined period may be a predetermined value stored in advance in memory, or may be a period of time until the rate of change in the battery state becomes equal to or lower than a predetermined rate of change. When the predetermined period immediately after the transition from takeoff operation to cruising operation has elapsed, the controller 50 proceeds to step S40. When the predetermined period has not elapsed, the controller 50 ends the series of processes.

When the predetermined period has elapsed, the controller 50 executes a process of determining power distribution among multiple battery packs 141 so as to suppress the state variation among the multiple battery packs 141 (step S40). The controller 50 may determine power distribution for multiple battery packs 141 that supply power to a common EPU 15. Power distribution among the EPUs 15, that is, power distribution for the battery packs 141 corresponding to each of the EPUs 15 may be determined. While determining the power distribution among the EPUs 15, the power distribution among the multiple battery packs 141 corresponding to each EPU 15 may also be determined.

Next, the controller 50 controls the output of the battery packs 141 according to the determined distribution (step S50), and ends the series of processes.

The controller 50 may repeatedly execute the process shown in FIG. 13 at a predetermined cycle during cruising operation except for the predetermined period. The controller 50 may obtain an estimated value of the battery information at the time of completion of cruising operation using the output profile during cruising operation, and determine the power distribution based on this estimated value. In this case, the control of step S50 may be executed with the power distribution once determined until cruising operation is completed.

The process of S20 may be omitted, for example. When the predetermined period is a preset value, a process of determining whether the predetermined period has ended may be performed before acquiring the battery information. That is, after the end of the predetermined period, battery information may be acquired, and power distribution may be determined and controlled based on the acquired battery information. In this case, the battery information is not acquired before the end of the predetermined period.

When it is determined in step S20 that at least one of the battery 14 and the EPUs 15 has an abnormality, equal power distribution control may be performed. Instead of the equal power distribution control, the control that was previously being performed may be continued. Similarly, when it is determined in step S30 that the predetermined period has not ended, the equal power distribution control may be performed, or the previous control may be continued.

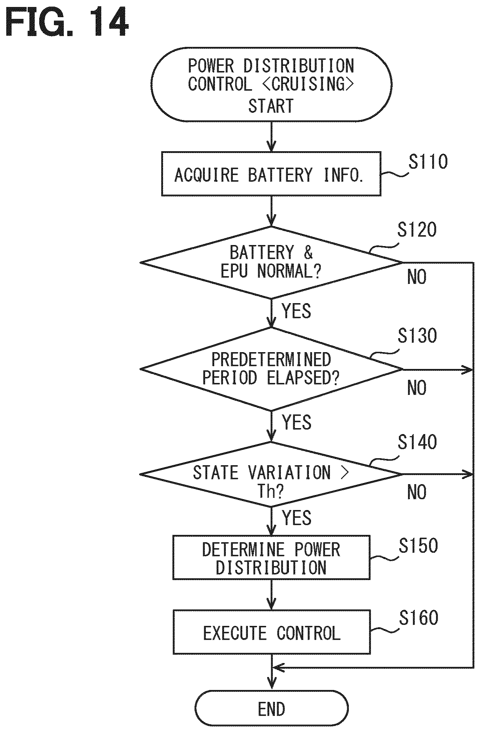

As shown in FIG. 14, a process of determining the state variation (step S140) may be added between the process of determining the end of the predetermined period and the process of determining power distribution. Steps S110, S120, and S130 shown in FIG. 14 correspond to steps S10, S20, and S30 shown in FIG. 13. Steps S150 and S160 correspond to steps S40 and S50.

In step S140, the controller 50 determines whether the state variation has exceeded a predetermined degree Th. When the state variation exceeds the predetermined degree Th, the controller 50 executes the process of step S150, that is, the power distribution determination process. When the state variation does not exceed the predetermined degree Th, the controller 50 ends the series of processes.

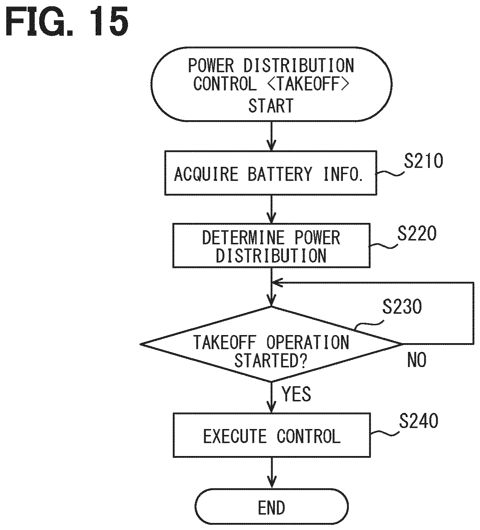

FIG. 15 shows an example of a power distribution control process executed by the controller 50, that is, a control method for power distribution. The controller 50 may start the process shown in FIG. 15, for example, a predetermined time before the scheduled takeoff time. The controller 50 may start the process shown in FIG. 15 in response to a predetermined process executed before the start of takeoff or a predetermined state before the start of takeoff.

First, the controller 50 acquires battery information (step S210). A calculated value may be acquired as the battery information, or raw data may be acquired and then calculated to acquire the battery information. The battery information may be an estimated value or a predicted value calculated by a regression model or the like using battery data such as actual measured values, calculated values, and history data, and data such as an output profile during takeoff operation. The controller 50 acquires the battery information at the end of the takeoff operation as the battery information.

Next, the controller 50 executes a process for determining power distribution (step S220). The controller 50 predicts the variation in battery state at the time of completion of the takeoff operation using the battery information acquired in step S210, and determines the power distribution so as to suppress the state variation among the multiple battery packs 141. The controller 50 predicts the SOC variation from, for example, the SOC and battery resistance information. The controller 50 predicts the temperature variation from, for example, battery temperature information. The controller 50 may determine the power distribution using a regression model or a map model. The controller 50 determines, for example, power distribution for multiple battery packs 141 that supply power to a common EPU 15.

Next, the controller 50 determines whether the takeoff operation has started (step S230). The controller 50 repeats the process of step S230 until the takeoff operation is started. When it is determined that the takeoff operation has started, the controller 50 controls the output of the battery packs 141 in accordance with the distribution determined in step S220 (step S240). When the takeoff operation is completed, the controller 50 terminates step S240 and the series of processes shown in FIG. 15.

In this way, the controller 50 predetermines the power distribution before takeoff operation, and controls the power distribution based on the predeterminable distribution from the start of takeoff. Although not shown in the figure, the landing operation is similar. The controller 50 predetermines the power distribution before the landing operation, and controls the power distribution based on the predeterminable distribution from the start of landing.

It may be determined whether the battery 14 and EPUs 15 are normal, as in the case of cruising operation (see step S20). The controller 50 may execute the distribution determination process of step S220 if normal, and may end the series of processes if not normal.

### (Summary of First Embodiment)

As described above, the controller 50 of the present embodiment acquires battery information about multiple unit batteries, and determines the power distribution to the unit batteries based on the acquired battery information so as to suppress the state variation among the unit batteries. After grasping the state of the unit batteries (battery packs 141), the power distribution of the multiple unit batteries is controlled. This makes it possible to suppress variations in the battery state, that is, bias among unit batteries. As a result, the occurrence of battery abnormalities can be suppressed. For example, battery abnormalities can be prevented before the occurrence. Thus, the safety of the flight can be enhanced.

As described above, the high output load during takeoff is likely to cause bias in ion concentration and temperature. Immediately after the transition from takeoff to cruising, the accuracy of monitoring the battery state temporarily decreases due to the influence of the bias described above. The controller 50 executes power distribution control during at least a part of the operation period excluding the predetermined period. This makes it possible to avoid errors in determination of the distribution control values and effectively suppress variation in the battery state.

The controller 50 may limit the execution of power distribution control for the predetermined period. The controller 50 does not execute the power distribution control for the predetermined period immediately after transition to cruising operation. This makes it possible to avoid errors in determination of the distribution control values, that is, to suppress malfunction.

The predetermined period may be set based on the rate of change in the state of the unit batteries associated with the takeoff operation. This makes it possible to execute power distribution control while avoiding periods of large change rates that would cause a decrease in monitoring accuracy. Therefore, errors in determination can be more reliably avoided.

The controller 50 may execute the power distribution control when the state variation exceeds a predetermined degree Th. In other words, when the state variation is small, the power distribution control may not be executed. Since the power distribution control is performed when the state variation is large, taking into consideration the accuracy of power distribution, the state variation can be effectively suppressed.

The controller 50 may execute the power distribution control during cruising operation except for the predetermined period. Thus, the state variation that has increased due to the takeoff operation can be reduced. The state variation before landing operation, which requires high power, can be reduced. Since the power distribution control is performed during cruising operation except for the predetermined period immediately after takeoff operation is completed, errors in determination of the distribution control values can be avoided and variation in battery state can be effectively suppressed.

As an example of power distribution control during cruising operation, the controller 50 may execute power distribution control using an estimated value or a predicted value using an output profile during cruising operation as the battery information. Accordingly, the state variation that may occur during cruising operation can be avoided in advance, compared to feedback control based on real-time monitoring.

The controller 50 may control the output distribution of the multiple EPUs 15 during cruising operation so as to suppress the state variation between battery packs 141 (unit batteries) corresponding to each of the multiple EPUs 15. During cruising, a high output load is not required as during takeoff and landing, and the load differs depending on the EPUs 15. Since the output distribution is adjusted among the EPUs 15 that are subjected to different loads, the state variation can be effectively suppressed.

The controller 50 may determine the power distribution during takeoff and landing operations before the start of the takeoff and landing operations. Since the power distribution is determined before the start of takeoff and landing operations, the increase in state variation associated with high output loads can be suppressed.

The controller 50 may determine power distribution using a predicted value using an output profile during takeoff and landing operations as battery information. The power distribution is predetermined based on prediction. Therefore, the state variation during takeoff and landing operations can be suppressed. For example, the state variation that may occur during takeoff and landing operations can be avoided in advance.

The controller 50 may determine the power distribution using the SOC and/or battery temperature as the battery information. Since the SOC and battery temperature, which are particularly likely to be largely varied under high output loads, are used as the battery information, the accuracy of power distribution can be improved.

In the redundant configuration illustrated in FIG. 2, the controller 50 may control power distribution among multiple battery packs 141 that supply power to a common EPU 15. In this configuration, the EPU 15 includes multiple motors 151 and inverters 152 individually connected to the motors 151. Therefore, by controlling the inverters 152, the power distribution control is possible. In other words, the power distribution control can be performed without an additional hardware configuration.

The control method of this embodiment includes acquiring the battery information and controlling power distribution. In acquiring the battery information, the battery information indicating the state of the multiple battery packs 141 (unit batteries) included in the battery 14 is acquired. In the power distribution control, power distribution among the multiple battery packs 141 is controlled based on the battery information during at least a part of the operation period excluding the predetermined period so as to suppress the state variation among the battery packs 141. Accordingly, after grasping the state of the unit batteries (battery packs 141), the power distribution of the multiple unit batteries is controlled. This makes it possible to suppress variations in the battery state, that is, bias among unit batteries. As a result, the occurrence of battery abnormalities can be suppressed. For example, battery abnormalities can be prevented before the occurrence. Thus, the safety of the flight can be enhanced.

As described above, the high output load during takeoff is likely to cause bias in ion concentration and temperature. Immediately after the transition from takeoff to cruising, the accuracy of monitoring the battery state temporarily decreases due to the influence of the bias described above. In contrast, in the control method of the present embodiment, the power distribution control is executed during at least a part of the operation period excluding the predetermined period. This makes it possible to avoid errors in determination of the distribution control values and effectively suppress variation in the battery state.

The program of this embodiment (program 203P) causes at least one processor 201 (processing unit) to acquire the battery information and execute the power distribution control. The program 203P causes the processor 201 to execute acquisition of the battery information indicating the state of the multiple battery packs 141 (unit batteries) included in the battery 14. The program 203P causes the processor 201 to execute the power distribution control of the multiple battery packs 141 based on the battery information so as to suppress the state variation among the multiple battery packs 141 during at least a portion of the operation period excluding the predetermined period. Accordingly, after grasping the state of the unit batteries (battery packs 141), the power distribution of the multiple unit batteries is controlled. This makes it possible to suppress variations in the battery state. As a result, the occurrence of battery abnormalities can be suppressed. For example, battery abnormalities can be prevented before the occurrence. Thus, the safety of the flight can be enhanced.

In particular, the high output load during takeoff is likely to cause bias in ion concentration and temperature. Immediately after the transition from takeoff to cruising, the accuracy of monitoring the battery state temporarily decreases due to the influence of the bias described above. According to the program 203P of this embodiment, the power distribution control is executed during at least a part of the operation period excluding the predetermined period. This makes it possible to avoid errors in determination of the distribution control values and effectively suppress variation in the battery state.

### (Modifications)

The EPUs 15 and the battery 14 are not limited to the redundant configuration. Each of the multiple EPUs 15 may include only one motor 151 and receive supply of power from a single different battery pack 141. The controller 50 controls the power distribution of the multiple battery packs 141 during at least a part of the operation period excluding the predetermined period, so as to suppress the state variation among the multiple battery packs 141.

### Second Embodiment

This embodiment is a modification based on the preceding embodiment, and the description of the preceding embodiment are incorporated. In the preceding embodiment, power distribution is controlled with respect to the output (discharge) of unit batteries. Alternatively or additionally, power distribution may be controlled with respect to input (charging) of the unit batteries.

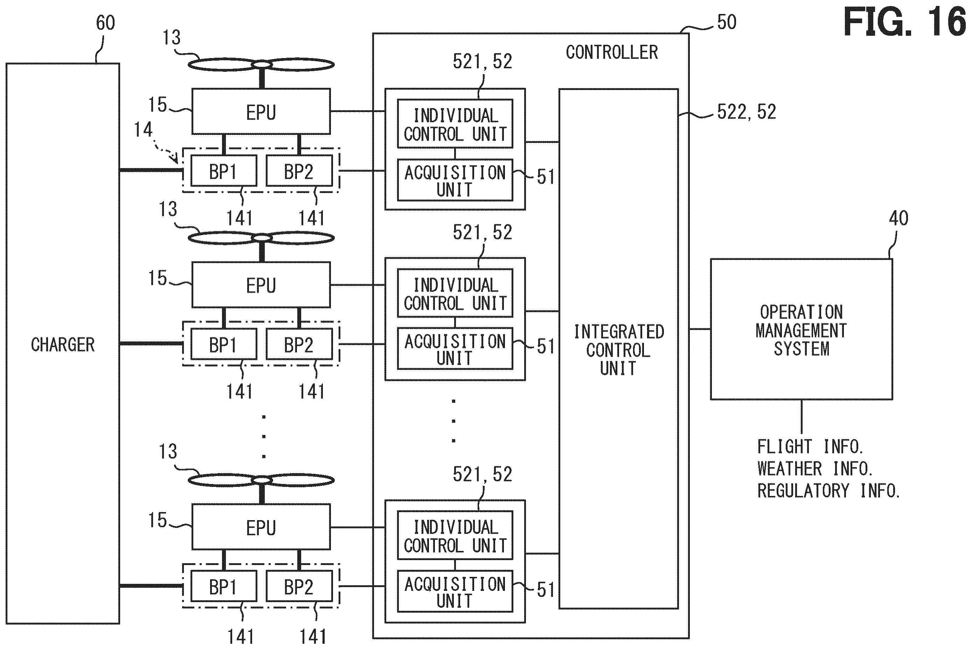

FIG. 16 shows a controller 50 according to the present embodiment. FIG. 16 shows a system including the controller 50. The controller 50 may form a power control system together with a charger 60. The controller 50 may form a system together with at least one of a battery 14 and EPUs 15 and the charger 60. The controller 50 is configured to execute power distribution control during input (charging). The charger 60 may be an onboard generator, a fuel cell, a battery separate from the battery 14, or a ground-based charger. The battery 14 is chargeable from the charger 60.

A charging-related device (not shown) that controls charging from the charger 60 to the battery 14 may be provided integrally with the charger 60 or may be provided integrally with the battery 14. The operation of the charging-related devices is controlled by the controller 50. The charging-related device has a function of electrically connecting or disconnecting the charger 60 and the battery 14, that is, a function of turning on and off the connection, in order to manage the timing of charging operation and continuous operation time. The charging-related device has a function of distributing power among multiple battery packs 141. The charging-related device includes, for example, a relay. If it is necessary to control the current, a current adjustment function may be added to the charging-related device. For example, a resistor, a DC-DC converter, a bidirectional DC-DC converter, or the like can be used. In a case where it is desired to add a bidirectional charging function, for example, the bidirectional DC-DC converter can be used.

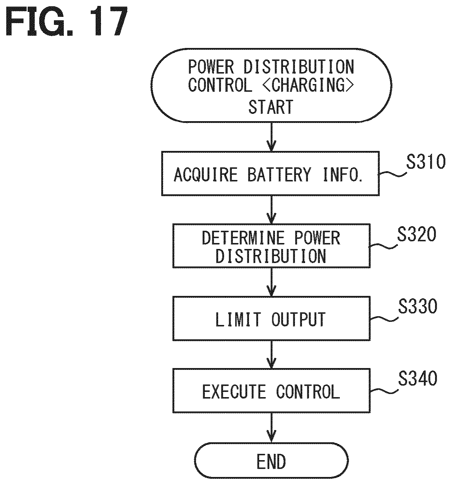

FIG. 17 shows an example of a power distribution control process executed by the controller 50, that is, a control method for power distribution. The controller 50 executes the process shown in FIG. 17 in conjunction with the charging operation.

First, the controller 50 acquires battery information (step S310). A calculated value may be acquired as the battery information, or raw data may be acquired and then calculated to acquire the battery information. The battery information may be an actual measured value, an estimated value, or a predicted value.

Next, the controller 50 executes a process for determining power distribution (step S320). The controller 50 determines the power distribution so as to suppress the state variation in among the multiple battery packs 141. The controller 50 may determine power distribution for multiple battery packs 141 that supply power to a common EPU 15. Power distribution among the EPUs 15 may be determined. While determining the power distribution among the multiple EPUs 15, the power distribution may also be determined among the multiple battery packs 141 corresponding to each EPU 15.

Next, the controller 50 limits the output from the battery packs 141 (step S330). As a result, the battery packs 141 (battery 14) does not output (discharge) during charging. Next, the controller 50 controls the input to the battery packs 141 in accordance with the distribution determined in step S320 (step S340). The controller 50 controls the operation of the charging-related device, thereby controlling the power distribution among the multiple battery packs 141 during charging so as to suppress the state variation among the multiple battery packs 141. When charging is completed, the controller 50 terminates step S340 and the series of processes shown in FIG. 17.

The controller 50 may execute the control of step S340 using the power distribution that has been determined once. The controller 50 may repeatedly execute the process shown in FIG. 17 at a predetermined cycle. In other words, the battery information may be acquired and the power distribution may be determined at predetermined cycles, and the control of step S240 may be executed based on the determined distribution.

### (Summary of Second Embodiment)

According to this embodiment, power distribution is controlled during charging, which is part of the operation period excluding the predetermined period. This makes it possible to suppress the state variation among the multiple battery packs 141 (unit batteries) at the time of completion of charging. The controller 50 may control the power distribution during output (discharging) and input (charging). By performing power distribution not only during output but also during input, it is possible to increase the opportunities for suppressing variation in battery state.

The controller 50 may prevent the output from the battery packs 141 (unit batteries) during charging. Since no power is output from the battery pack 141 during charging, safety can be improved. In addition, an increase in the current load on a harness can be suppressed.

The configuration described in this embodiment can be combined with any of the preceding configurations.

### Third Embodiment

This embodiment is a modification based on the preceding embodiment, and the description of the preceding embodiment are incorporated. In the previous embodiment, power distribution was controlled based on battery information. In addition, the power distribution may be controlled taking into consideration temperature of motors that constitute EPUs.

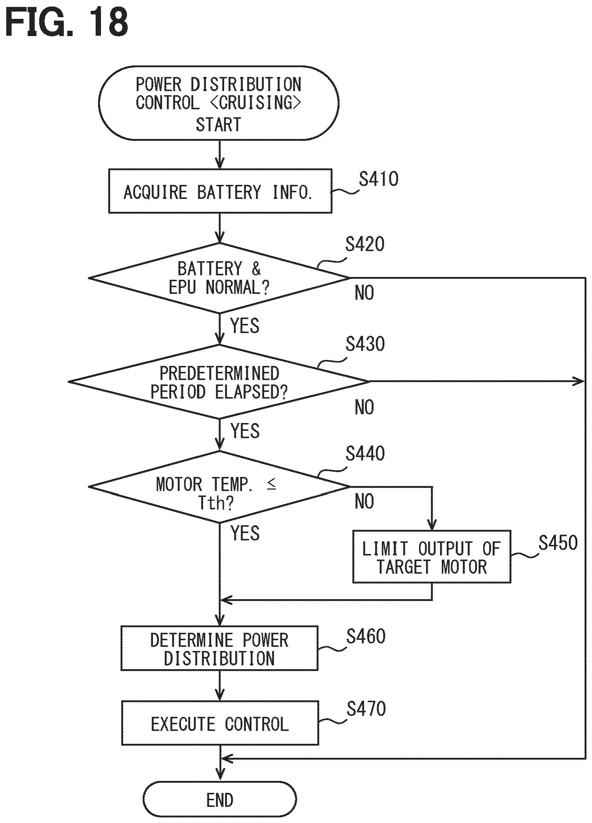

FIG. 18 shows an example of a power distribution control process executed by the controller 50, that is, a control method for power distribution. FIG. 18 corresponds to FIG. 13. The control method shown in FIG. 18 has configuration in which steps S440 and S450 are added to the control method shown in FIG. 13. Steps S410, S420, and S430 correspond to steps S10, S20, and S30 shown in FIG. 13. Steps S460 and S470 correspond to steps S40 and S50.

In step S410, the controller 50 acquires battery information and temperature information of motors 151 constituting EPUs 15. The controller 50 acquires temperature information of each of the motors 151.

When it is determined in step S430 that a predetermined period has ended, the controller 50 determines whether the temperature of the motors 151 is equal to or lower than a predetermined threshold temperature Tth (step S440). When the temperature of at least one of the motors 151 exceeds the threshold temperature Tth, the controller 50 limits the output of the motor 151 (target motor) that exceeds the threshold temperature Tth (step S450), and then executes the power distribution determination process in step S460. When the temperature of each of the motors 151 is equal to or lower than the threshold temperature Tth, the process of step S460 is executed without executing the process of step S450.

In step S460, the controller 50 determines the power distribution so as to suppress the state variation among the multiple battery packs 141. When the temperature of at least one of the motors 151 exceeds the threshold temperature Tth, the controller 50 restricts the output of battery packs 141 that supply power to the target motor and determines the power distribution of the remaining battery packs 141. The controller 50 determines the power distribution so as to suppress the state variation among the battery packs 141 that do not supply power to the target motor.

When the temperature of each of the motors 151 is equal to or lower than the threshold temperature Tth, the controller 50 determines the power distribution of all the battery packs 141. The controller 50 determines the power distribution so as to suppress the state variation among all the battery packs 141.

### (Summary of Third Embodiment)

According to this embodiment, the distribution of power supplied from each battery pack 141 is controlled based on temperature information of the motors 151. The output of the battery packs 141 connected to supply power to the motor 151 (target motor) whose temperature exceeds the threshold temperature Tth is restricted, and the power distribution of the remaining battery packs 141 is determined. The power distribution of the battery pack 141 connected to the target motor is set to zero, thereby preventing the target motor from outputting power. Therefore, the risk of motor abnormality can be avoided while executing power distribution control.

### (Modifications)

The configuration described in this embodiment can be combined with any of the preceding configurations.

Although an example has been given in which the output of the motor 151 is restricted when the temperature of the motor 151 exceeds the threshold temperature Tth, the present invention is not limited to this. For example, the threshold temperature Tth may be set in multiple stages, so that the higher the temperature, the greater the limiting amount. Then, the power distribution may be determined taking into consideration the limiting amount so that the power distribution is smaller as the limiting amount increases.

Further, the processes of S440 and S450 may be omitted. The controller 50 may determine the power distribution based on battery information and motor temperature information. The controller 50 may determine the power distribution of the multiple battery packs 141 so as to restrict the output of the motor 151 having a high temperature while suppressing the state variation.

The processes in steps S440 and S450 are not limited to the power distribution control for cruising. This may also be applied to power distribution control during takeoff and landing.

### Fourth Embodiment

This embodiment is a modification based on the preceding embodiment, and the description of the preceding embodiment are incorporated. In the preceding embodiment, the state variation among the battery packs is suppressed. Alternatively or additionally, variation in the state of the battery modules may be suppressed. In addition, in a configuration including a spare module or a spare pack, the spare module or the spare pack may be selected so as to suppress the state variation.

### (Battery Module)

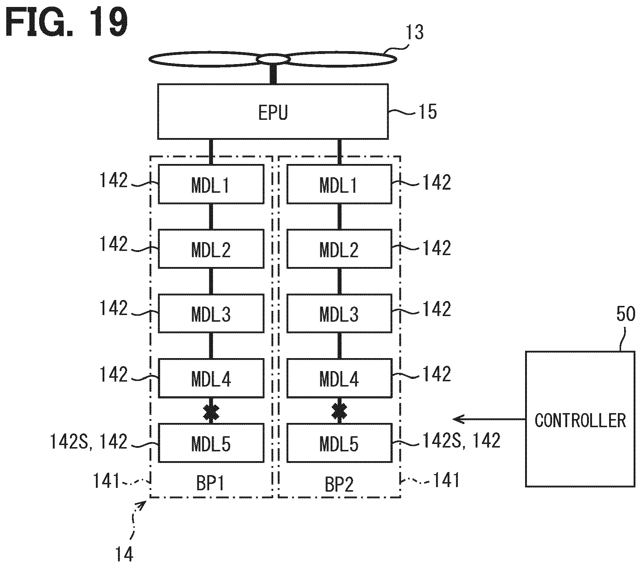

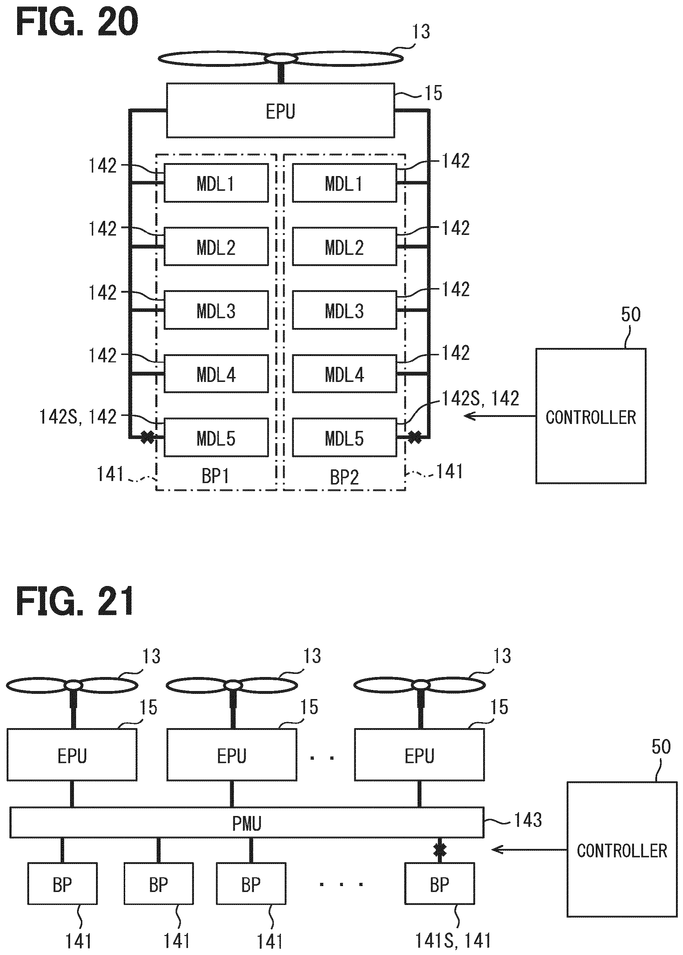

FIGS. 19 and 20 each show an example of a controller 50 according to the present embodiment and multiple battery modules for which power distribution control is executed by the controller 50. As described above, the battery 14 includes multiple unit batteries, which are battery elements of a predetermined unit. The battery 14 includes multiple battery modules 142 as unit batteries. The battery 14 may include only one battery pack 141 including the multiple battery modules 142, or may include multiple battery packs 141.

The battery modules 142 constituting each battery pack 141 may be connected in series with each other, for example, as shown in FIG. 19. As shown in FIG. 20, they may be connected in parallel with each other. Although not shown in the figure, they may be connected in series and in parallel to each other. In FIGS. 19 and 20, each battery pack (BP1, BP2) 141 in the redundant configuration shown in FIG. 2 includes five battery modules (MDL1, MDL2, MDL3, MDL4, MDL5) 142. The number of battery modules 142 is not limited to the examples shown in FIGS. 19 and 20. In the redundant configuration shown in FIG. 3, each battery pack 141 may include multiple battery modules 142. In a configuration in which the battery 14 includes only one battery pack 141, the battery pack 141 may include multiple battery modules 142.

Each battery pack 141 has a function of electrically isolating one of the battery modules 142 from the other battery modules 142. Such a cutoff function can be provided by a relay or a semiconductor switch. In the case of the series connection illustrated in FIG. 19, for example, two relays or two semiconductor switches may be provided for each battery module 142. The configuration may be such that when a first relay is turned on and a second relay is turned off, current flows through a path that includes the battery module 142, and when the first relay is turned off and the second relay is turned on, current flows through a path that bypasses the path of the battery module 142. In the case of the parallel connection illustrated in FIG. 20, for example, one relay or one semiconductor switch may be provided for each battery module 142. When a relay is on, the battery module 142 is electrically connected, and when the relay is off, the battery module 142 is disconnected.

Each of the battery modules 142 constituting the battery pack 141 includes a spare module 142S which is a battery module 142 whose electrical connection with the other battery modules 142 is temporarily cut off. The spare module 142S is a battery module 142 that does not perform input/output. As an example, in FIGS. 19 and 20, the battery module (MDL5) 142 is a spare module 142S.

### (Power Distribution Control)

The voltage of the battery 14 that drives the EPUs 15 is high compared to that for automotive applications. This increases the number of battery modules 142 connected in series, which causes problems with SOC variations and temperature variations among the battery modules 142. As described above, in an electric flight vehicle such as the eVTOL 10, variation in the state of the multiple battery modules 142 (unit batteries) can also be an issue.

The controller 50 controls the power distribution of the multiple battery modules 142 in the same manner as in the case where the battery packs 141 are used as the unit batteries. The controller 50 acquires battery information for each of the multiple battery modules 142 that constitute a common battery pack 141. The controller 50 selects a battery module 142 to be electrically disconnected, that is, the spare module 142S, based on the acquired battery information so as to suppress state variation among the battery modules 142.

The controller 50 controls the on/off of the above-mentioned relays and semiconductor switches to select one of the battery modules 142 as the spare module 142S. The controller 50 may select a battery module 142 with a low SOC or a battery module 142 with a high battery temperature as the spare module 142S. The controller 50 may switch the spare module 142S as necessary during cruising operations or takeoff and landing operations. For example, in the configuration shown in FIG. 19, the spare module 142S may be switched from the battery module (MDL5) 142 to the battery module (MDL3) 142. The controller 50 selects some of the multiple battery modules 142 as spare modules 142S. The controller 50 may select one spare module 142S, or may select multiple spare modules 142S.

In this manner, the controller 50 controls the power distribution of the multiple battery modules 142 so as to suppress the state variation among the battery modules 142 which are unit batteries.

### (Summary of Fourth Embodiment)

According to this embodiment, a spare module 142S is selected from the multiple battery modules 142 based on the battery information so as to suppress state variation among the multiple battery modules 142. This makes it possible to suppress variation in the state of the battery modules 142 in the battery pack 141 without significantly changing the power supplied to the EPUs 15. For example, the battery states of the battery modules 142 can be made substantially uniform.

Furthermore, when an abnormality occurs in one of the battery modules 142, this battery module 142 can be separated as a spare module 142S. Therefore, redundancy can be ensured within the battery pack 141.

### (Modifications)

Although an example in which power is supplied to the EPUs 15 from multiple battery packs 141 has been shown, the present invention is not limited to this. The above-described selection of the spare module 142S can also be applied to a configuration in which power is supplied to one EPU 15 from one battery pack 141 having multiple battery modules 142.

The configuration described in this embodiment can be combined with any of the preceding configurations. For example, the controller 50 may control the power distribution of the battery packs 141 so as to suppress the state variation among the multiple battery packs 141, and may select a spare module 142S so as to suppress the state variation among multiple battery modules 142 in each battery pack 141. When controlling the power distribution of the battery packs 141 so as to suppress the state variation among the battery packs 141, the power of the multiple battery modules 142 included in each battery pack 141 may be controlled to be equal.

As shown in FIG. 21, a spare pack 141S may be selected from multiple battery packs 141. In FIG. 21, similarly to FIG. 3, power can be supplied to common EPUs 15 from multiple battery packs 141 which are unit batteries. The multiple battery packs 141 are connected in parallel. The multiple battery packs 141 supply power to the EPUs 15 via the PMU 143.

In FIG. 21, the battery packs 141 can be electrically disconnected individually from the other battery packs 141. Such a cutoff function can be provided by a relay or a semiconductor switch. When a switch is turned on, the battery pack 141 is electrically connected, and when the switch is turned off, the battery pack 141 is disconnected. The relay or semiconductor switch may be provided in the MPU 143 or in each battery pack 141. The multiple battery packs 141 include a spare pack 141S, which is a battery pack 141 whose electrical connection with the other battery packs 141 has been temporarily cut off. The spare pack 141S is a battery pack 141 that does not perform input/output.

The controller 50 controls the on/off of the relays and semiconductor switches described above to select one of the battery packs 141 as the spare pack 141S. The controller 50 may select a battery pack 141 with a low SOC or a battery pack 141 with a high battery temperature as the spare pack 141S. The controller 50 may switch the spare pack 141S as necessary during cruising operation or takeoff and landing operation. The controller 50 may select one spare pack 141S, or may select multiple spare packs 141S.

The controller 50 selects a spare pack 141S from among the multiple battery packs 141 based on the battery information so as to suppress the state variation among the multiple battery packs 141. This makes it possible to suppress the state variation among the battery packs 141. For example, the battery states of the battery packs 141 can be made substantially uniform. Furthermore, when an abnormality occurs in one of the battery packs 141, this battery pack 141 can be separated as a spare pack 141S. Therefore, redundancy can be improved.

Alternatively, a spare pack 141S may be selected from the multiple battery packs 141 connected in parallel, and a spare module 142S may be selected from the multiple battery modules 142 in each battery pack 141. When the spare pack 141S is selected from the multiple battery packs 141 connected in parallel, the power of the multiple battery modules 142 included in each battery pack 141 may be controlled to be equal.

### Other Embodiments

The disclosure in this specification, the drawings, and the like is not limited to the exemplified embodiments. The disclosure includes exemplary embodiments and modifications by those skilled in the art based on the exemplary embodiments. For example, the disclosure is not limited to the combinations of components and/or elements shown in the embodiments. The disclosure may be implemented in various combinations. The disclosure may include additional portions that can be added to the embodiments. The disclosure includes those in which the components and/or elements of the embodiments are omitted. The disclosure includes the redistribution or combination of components and/or elements between one embodiment and another embodiment. The disclosed technical scope is not limited to the description of the embodiments. The several technical scopes disclosed are indicated by the description of the claims, and should be further understood to include meanings equivalent to the description of the claims and all modifications within the scope.

The disclosure in the specification, drawings and the like is not limited by the description of the claims. The disclosures in the specification, the drawings, and the like encompass the technical ideas described in the claims, and further extend to a wider variety of technical ideas than those in the claims. Hence, various technical ideas can be extracted from the disclosure of the specification, the drawings, and the like without being bound by the description of the claims.

When an element or layer is referred to as being "on," "coupled," "connected," or "combined," it may be directly on, coupled, connected, or combined to the other element or layer, or further, intervening elements or layers may be present. In contrast, when an element or a layer is described as "disposed directly above" or "directly connected", an intervening element or an intervening layer is not present. Other terms used to describe the relationships between elements (for example, "between" vs. "directly between", and "adjacent" vs. "directly adjacent") should be interpreted similarly. As used herein, the term "and/or" includes any combination and all combinations relating to one or more of the related listed items. For example, the term A and/or B includes only A, only B, or both A and B.

Each of the various flowcharts shown in the present disclosure is an example, and the number of steps constituting the flowchart and the execution order of the process can be appropriately changed. The device, the system and the method therefor described in the present disclosure may be implemented by a dedicated computer which constitutes a processor programmed to perform one or more functions by executing computer programs. The device and the method described in the present disclosure may be also implemented by a dedicated hardware logic circuit. Furthermore, the device and the method thereof described in the present disclosure may be implemented by one or more dedicated computers including a combination of a processor that executes a computer program and one or more hardware logic circuits.

For example, a part or all of the functions of the processor 201 may be implemented as hardware. An aspect in which a certain function is implemented as hardware includes an aspect in which one or multiple ICs are used. As the processor (arithmetic core), a CPU, MPU, GPU, DFP, or the like can be adopted. CPU is an abbreviation for Central Processing Unit. MPU is an abbreviation for Micro-Processing Unit. GPU is an abbreviation for Graphics Processing Unit. DFP is an abbreviation for Data Flow Processor.

A part or all of the functions of the processor 201 may be implemented by combining multiple types of calculation processing devices. A part or all of the functions of the processor 201 may be implemented using an SoC, ASIC, FPGA, or the like. SoC is an abbreviation for System-on Chip. ASIC is an abbreviation for Application Specific Integrated Circuit. FPGA is an abbreviation for Field-Programmable Gate Array. The same applies to the processor 311.

The computer program described above may be stored in a computer-readable non-transitory tangible storage medium as instructions to be executed by a computer. As the program storage medium, an HDD, an SSD, a flash memory, or the like can be adopted. HDD is an abbreviation for Hard-Disk Drive. SSD is an abbreviation for Solid State Drive. The scope of the present disclosure also includes a program for causing a computer to function as the controller 50, and forms such as a non-transitory tangible storage medium such as a semiconductor memory in which the program is stored.

### Disclosure of Technical Ideas

This description discloses multiple technical ideas described in multiple sections listed below. Some sections may be presented in multiple dependent form in which a subsequent section refers to the preceding sections selectively. Moreover, some sections may be written in multiple dependent form referring to another multiple dependent form. These sections written in the multiple dependent form define multiple technical ideas.

### Technical Idea 1

A controller for controlling power supplied from a battery (15) to an electric propulsion device (15) configured to drive a rotary wing (13) in an electric flight vehicle (10). The controller includes an acquisition unit and a control unit. The acquisition unit (51) is configured to acquire battery information indicating states of unit batteries (141, 142) included in the battery. The control unit (52) is configured to execute power distribution control to control power distribution of the unit batteries based on the battery information to reduce variation in state among the unit batteries during at least a portion of an operation period of the electric flight vehicle excluding a predetermined period immediately following transition from takeoff operation to cruising operation.

### Technical Idea 2

In the controller according to technical idea 1, the predetermined period is set based on a rate of change in the state of the unit batteries associated with the takeoff operation.

### Technical Idea 3

In the controller according to technical idea 1 or 2, the control unit is configured to execute the power distribution control based on the variation exceeding a predetermined degree.

### Technical Idea 4

In the controller according to any one of technical ideas 1 to 3, the control unit is configured to restrict execution of the power distribution control during the predetermined period.

### Technical Idea 5

In the controller according to any one of technical ideas 1 to 4, the control unit is configured to executes the power distribution control during the cruising operation except for the predetermined period.

### Technical Idea 6

In the controller according to technical idea 5, wherein the control unit executes the power distribution control based on the battery information that is estimated or predicted using a battery output profile of the cruising operation.

### Technical Idea 7

In the controller according to technical idea 5 or 6, the electric propulsion device is one of electric propulsion devices of the electric flight vehicle. The control unit is configured to control output distribution of the electric propulsion devices during the cruising operation to reduce the variation in state among the unit batteries corresponding to the respective electric propulsion devices.

### Technical Idea 8

In the controller according to any one of technical ideas 1 to 7, the control unit is configured to determine power distribution for takeoff and landing operations prior to start of the takeoff and landing operations.

### Technical Idea 9

In the controller according to technical idea 8, the control unit is configured to determine the power distribution using a predicted value as the battery information, the predicted value being a value predicted using a battery output profile of the takeoff and landing operations.

### Technical Idea 10

In the controller according to any one of technical ideas 1 to 9, the control unit is configured to control distribution of power supplied to each of the unit batteries during charging operation of the unit batteries.

### Technical Idea 11

In the controller according to technical idea 10, the control unit is configured to restrict an output from the unit batteries during the charging operation.

### Technical Idea 12

In the controller according to any one of technical ideas 1 to 11, the control unit is configured to determine power distribution based on an SOC and/or a battery temperature as the battery information.

### Technical Idea 13

In the controller according to any one of technical ideas 1 to 12, the unit batteries are battery packs individually connected to motors included in each electric propulsion device. The control unit is configured to control distribution of power supplied to the electric propulsion device among the battery packs.

### Technical Idea 14

In the controller according to technical idea 13, the control unit is configured to control the distribution of power supplied from each battery pack based on temperature information of the motors.

### Technical Idea 15

In the controller according to any one of technical ideas 1 to 14, the unit batteries are battery modules connected in series and/or in parallel to each other to form a battery pack. The battery modules include a spare module (142S) that is temporarily disconnected electrically from other battery modules. The control unit is configured to select the spare module from among the battery modules based on the battery information to reduce variation in state of the battery modules.

### Technical Idea 16

In the controller according to any one of technical ideas 1 to 12, the unit batteries are battery packs configured to supply power to a common electric propulsion device. The battery packs include a spare pack (141S) that is temporarily disconnected electrically from the electric propulsion device. The control unit is configured to select the spare pack from among the battery packs based on the battery information to reduce variation in state of the battery packs.

## Claims

1. A controller for controlling power supplied from a battery (14) to an electric propulsion device (15) configured to drive a rotary wing (13) in an electric flight vehicle (10), the controller comprising:
an acquisition unit (51) configured to acquire battery information indicating states of unit batteries (141, 142) included in the battery; and
a control unit (52) configured to execute power distribution control to control power distribution of the unit batteries based on the battery information to reduce variation in state among the unit batteries during at least a portion of an operation period of the electric flight vehicle excluding a predetermined period immediately following transition from takeoff operation to cruising operation.

2. The controller according to claim 1, wherein
the predetermined period is set based on a rate of change in the state of the unit batteries associated with the takeoff operation.

3. The controller according to claim 1, wherein
the control unit is configured to execute the power distribution control based on the variation exceeding a predetermined degree.

4. The controller according to claim 1, wherein
the control unit is configured to restrict execution of the power distribution control during the predetermined period.

5. The controller according to claim 1, wherein
the control unit is configured to executes the power distribution control during the cruising operation except for the predetermined period.

6. The controller according to claim 5, wherein
the control unit executes the power distribution control based on the battery information that is estimated or predicted using a battery output profile of the cruising operation.

7. The controller according to claim 5 or 6, wherein
the electric propulsion device is one of electric propulsion devices of the electric flight vehicle, and
the control unit is configured to control output distribution of the electric propulsion devices during the cruising operation to reduce the variation in state among the unit batteries corresponding to the respective electric propulsion devices.

8. The controller according to claim 1, wherein
the control unit is configured to determine power distribution for takeoff and landing operations prior to start of the takeoff and landing operations.

9. The controller according to claim 8, wherein
the control unit is configured to determine the power distribution using a predicted value as the battery information, the predicted value being a value predicted using a battery output profile of the takeoff and landing operations.

10. The controller according to claim 1, wherein
the control unit is configured to control distribution of power supplied to each of the unit batteries during charging operation of the unit batteries.

11. The controller according to claim 10, wherein
the control unit is configured to restrict an output from the unit batteries during the charging operation.

12. The controller according to claim 1, wherein
the control unit is configured to determine power distribution based on an SOC and/or a battery temperature as the battery information.

13. The controller according to claim 1, wherein
the unit batteries are battery packs individually connected to motors included in each electric propulsion device, and
the control unit is configured to control distribution of power supplied to the electric propulsion device among the battery packs.

14. The controller according to claim 13, wherein
the control unit is configured to control the distribution of power supplied from each battery pack based on temperature information of the motors.

15. The controller according to claim 1, wherein
the unit batteries are battery modules connected in series and/or in parallel to each other to form a battery pack,
the battery modules include a spare module (142S) that is temporarily disconnected electrically from other battery modules, and
the control unit is configured to select the spare module from among the battery modules based on the battery information to reduce variation in state of the battery modules.

16. The controller according to claim 1, wherein
the unit batteries are battery packs configured to supply power to a common electric propulsion device,
the battery packs include a spare pack (141S) that is temporarily disconnected electrically from the electric propulsion device, and
the control unit is configured to select the spare pack from among the battery packs based on the battery information to reduce variation in state of the battery packs.

17. A method for controlling power supplied from a battery (14) to an electric propulsion device (15) configured to drive a rotary wing (13) in an electric flight vehicle (10), the method comprising:
acquiring battery information indicating states of unit batteries (141, 142) included in the battery;
and
executing power distribution control to control power distribution of the unit batteries based on the battery information to reduce variation in state among the unit batteries during at least a portion of an operation period of the electric flight vehicle excluding a predetermined period immediately following transition from takeoff operation to cruising operation.

18. A program for controlling power supplied from a battery (14) to an electric propulsion device (15) configured to drive a rotary wing (13) in an electric flight vehicle (10), the program causing at least one processor (201) to perform:
acquiring battery information indicating states of unit batteries (141, 142) included in the battery;
and
executing power distribution control to control power distribution of the unit batteries based on the battery information to reduce variation in state among the unit batteries during at least a portion of an operation period of the electric flight vehicle excluding a predetermined period immediately following transition from takeoff operation to cruising operation.
